# EUROPEAN PATENT APPLICATION

(11) **EP 2 636 823 A1**
(43) Date of publication of application: **11.09.2013**
(21) Application number: 11838140.9
(22) Date of filing: 08.07.2011
(51) Int. Cl.: E05B 53/00

(54) **ENHANCED-SECURITY DOOR LOCK SYSTEM AND A CONTROL METHOD THEREFOR**

(30) Priority: 05.11.2010 KR 20100109634
(71) Applicant: Cho, Hee Moon, Seoul 135-240 (KR)
(72) Inventor: Cho, Hee Moon, Seoul 135-240 (KR)
(74) Representative: Viering, Jentschura & Partner
(86) International application number: PCT/KR2011/005015
(87) International publication number: WO 2012/060535

(57) **Abstract**

Objects of the present invention are: to provide a door lock system wherein security can be enhanced by adopting a configuration in which image-capturing cameras are provided in such a way as to respectively allow indoor and outdoor imaging on both sides of a door, and images can be captured by the applicable image-capturing camera only when there is some indoor or outdoor movement, and thus intruder movement and audio can always be recorded even if one of the image-capturing cameras is damaged; and to provide a control method for the door lock system. Other objects of the present invention are: to provide a door lock system wherein security can be further enhanced by adopting a configuration in which, when a doorbell is operated, the user's movements can be stored and used as data; and to provide a control method for the door lock system. In order to achieve these objects, the enhanced-security door lock system according to the present invention comprises: action-detecting sensors which are respectively provided on the indoor and outdoor sides of the door and detect surrounding movement; image-capturing cameras which are respectively provided on the inside and outside of the door and are for imaging indoors/outdoors in accordance with action signals from the action-detecting sensors; and an image-storage device for storing and outputting audio and images captured from the image-capturing cameras.

## Description

### Technical Field

The present invention relates, in general, to an enhanced-security door lock system and a method of controlling the system and, more particularly, to an enhanced-security door lock system and a method of controlling the system, which can perform monitoring by including a pair of imaging cameras so that the imaging cameras monitor motion occurring inside and outside a door and capture images if motion is detected, thus continuously monitoring the motion of an intruder even if any one imaging camera is broken or is damaged inside and outside the door.

### Background Art

Generally, in order to enhance security of doors in stores, apartments, and offices, various types of door locks have been developed and used. An example of such a door lock, a door lock described in the following Patent Document 1 is disclosed.

Such a door lock is configured to automatically capture images of a person who uses a door lock, or a person approaching the door lock, in response to an attempt to enter a fingerprint or a password, or the sensing of a human body using an infrared sensor and a signal detected by other types of sensing means, and is configured to allow captured images to be viewed inside the door lock while allowing the captured images to be stored or transmitted together with various types of information, thus realizing a further enhanced security function.

However, such a conventional door lock has the following problems.
1) Since an imaging camera is installed only on the front side of a door, it is difficult to track the motion of an intruder when the intruder breaks the imaging camera on the front side of the door upon making an intrusion with an intention to commit a theft.
2) The conventional door lock is weak in terms of night security because whether a person who enters and leaves through the door is an authorized passer is determined based on a fingerprint and a password.
3) When an intruder breaks into an indoor area without passing through the door, it cannot be determined that an intruder from the outside is present, thus deteriorating a crime prevention and security function. In order to make up for such a disadvantage, a separate intrusion detection system must be provided.

### Disclosure

### Technical Problem

Accordingly, the present invention has been made keeping in mind the above problems, and an object of the present invention is to provide a door lock system and a method of controlling the system, in which imaging cameras are provided inside and outside a door so as to capture images of indoor and outdoor areas, respectively, and which are configured such that the corresponding imaging camera can capture images only when any motion is detected in the indoor or outdoor area, and so even if any one imaging camera is broken, the motion and voice of an intruder may always be recorded, thus enhancing a security function.

Another object of the present invention is to provide a door lock system and a method of controlling the system, which are configured to, if a doorbell is operated, store the motion of the user of the doorbell and use the stored motion as data, thus further enhancing a security function.

### Technical Solution

In order to accomplish the above objects, an enhanced-security door lock system according to the present invention includes motion detection sensors respectively installed inside and outside a door and configured to detect surrounding motion; imaging cameras respectively installed inside and outside the door and configured to capture images of indoor and outdoor areas in response to operation signals output from the motion detection sensors; and an image storage device configured to store and output images and voices captured by the imaging cameras.

In particular, the motion detection sensors may additionally detect motion of a user who opens or closes the door.

Further, each of the imaging cameras may be an infrared camera, a thermal imaging camera, a network camera, or a Closed Circuit Television (CCTV) camera.

Furthermore, the image storage device may be a Digital Video Recorder (DVR) or a Network Video Recorder (NVR).

Furthermore, the image storage device may store images of the imaging camera capturing the motion of the user in response to manipulation of a doorbell, or store images displayed on a doorbell monitor in response to manipulation of the doorbell.

In addition, a method of controlling an enhanced-security door lock system according to the present invention includes a first step of detecting motion using motion detection sensors installed inside and outside a door, and repeatedly performing the first step if any motion is not detected; a second step of, if it is determined that motion is detected, capturing an image of the motion using a corresponding imaging camera, and storing the motion image in an image storage device; a third step of determining whether a doorbell has been manipulated, and if it is determined that the doorbell has not been manipulated, completing the step; and a fourth step of, if it is determined that the doorbell has been manipulated, storing an image displayed on a doorbell monitor or an image of the imaging camera capturing the motion in the image storage device.

### Advantageous Effects

In accordance with an enhanced-security door lock system and a method of controlling the system according to the present invention, the following advantages may be obtained.
1) Even if an intruder breaks any one imaging camera or prevents the imaging camera from capturing images so as to make an intrusion or the like, the motion and voice of the intruder may be recorded using the other imaging camera, thus further enhancing a security function.
2) When a doorbell is manipulated, an image of such a manipulation is captured at the same time that a voice is recorded, and then the image and voice may be displayed on a monitor, thereby obtaining the advantage of implementing a security function together with a calling function.
3) Even if an intruder makes an intrusion through a place other than a door, the motion of the intruder may be recorded using an imaging camera installed inside the door, so that there is no need to provide a separate intrusion prevention device, thereby further enhancing a security function.

### Description of Drawings

Fig. 1 is a plan sectional view showing a state in which a door lock system according to a first embodiment of the present invention is mounted on a door;
Fig. 2 is a block diagram schematically showing the configuration of the door lock system according to the first embodiment of the present invention;
Fig. 3 is a block diagram schematically showing the configuration of a door lock system according to a second embodiment of the present invention;
Fig. 4 is a flowchart showing a method of controlling the door lock system according to the present invention.

### <Description of the Reference Numerals in the Drawings>

100a, 100b: motion detection sensor
200a, 200b: imaging camera
300: image storage device
400: doorbell
410: doorbell monitor

### Best Mode

Hereinafter, preferred embodiments of the present invention will be described in detail with reference to the attached drawings. Prior to giving the description, the terms and words used in the present specification and claims should not be interpreted as being limited to their typical meaning based on the dictionary definitions thereof, but should be interpreted as having the meaning and concept relevant to the technical spirit of the present invention, on the basis of the principle by which the inventor can suitably define the implications of terms in the way which best describes the invention.

Accordingly, the embodiments described in the present specification and configurations shown in the drawings are only the most preferable embodiments of the present invention, and are not representative of the entire technical spirit of the present invention, and so it should be understood that various equivalents and modifications capable of replacing the embodiments and constructions of the present invention might be present at the time at which the present invention was filed.

### (First embodiment)

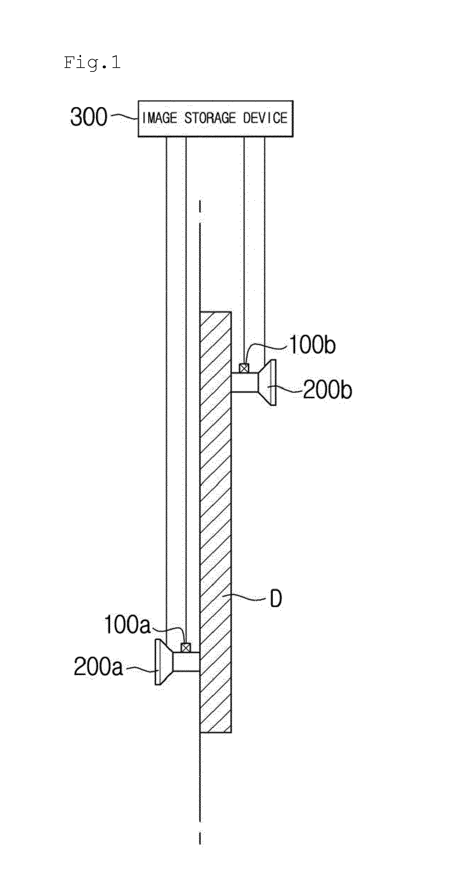

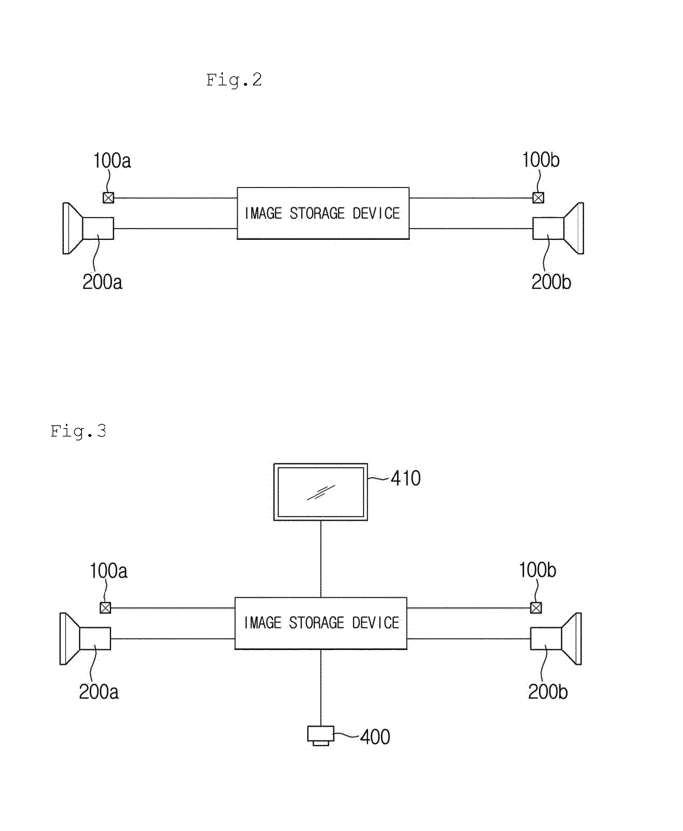

Fig. 1 is a plan sectional view showing a state in which a door lock system according to a first embodiment of the present invention is mounted on a door, and Fig. 2 is a block diagram schematically showing the configuration of the door lock system according to the first embodiment of the present invention. Here, reference character "D" denotes a door on which the door lock system according to the present invention is mounted.

The door lock system according to the first embodiment of the present invention includes motion detection sensors 100a and 100b for detecting motion occurring in indoor and outdoor areas with respect to the door D, imaging cameras 200a and 200b operated by the motion detection sensors 100a and 100b, and an image storage device 300 for recording captured images and voices.

Hereinafter, a detailed description will be made with respect to individual components of the present invention.

The motion detection sensors 100a and 100b are a kind of displacement sensor and denote sensors for converting the motion of an object into an electrical signal. The motion detection sensors 100a and 100b are respectively installed on the front and rear sides of the door D and configured to detect motion occurring in the indoor or outdoor area.

Further, the motion detection sensors 100a and 100b output detected signals to the image storage device 300, and the cameras 200a and 200b capture images only while motion is being detected due to the detected signals.

In a preferred embodiment of the present invention, although the motion detection sensors 100a and 100b have been described as being installed on the door D, they may also be installed near a doorway so that the sensors are located around the door D.

In this case, it is preferable to acquire images of an intruder who attempts to make an intrusion through the door D at night or the like, as well as users who are entering and leaving through the doorway, by installing the motion detection sensors 100a and 100b at locations where the handle of the door D and a door switching device can be detected together.

The imaging cameras 200a and 200b are respectively mounted on the front and rear sides of the door D and are configured to be selectively operated in response to signals detected by the motion detection sensors 100a and 100b.

In particular, the imaging cameras 200a and 200b are preferably implemented as cameras capable of capturing images even at night, as well as during the daytime. Examples of such a camera may include an infrared camera, a thermal imaging camera, and a Closed Circuit Television (CCTV) camera. Further, each of the imaging cameras 200a and 200b may also be implemented using a network camera connected in a wired or wireless manner so that whether images can be captured may be checked and so that captured images may be viewed even from the outside.

Furthermore, each of the imaging cameras 200a and 200b is preferably provided with a microphone (not shown) so that voices may be recorded in a capturing area using the microphone or the like. This microphone is used to record conversation between intruders, or surrounding audio.

In a preferred embodiment of the present invention, although the imaging cameras 200a and 200b have been described as being installed on the door D, they are preferably installed on the wall above the door D so that the cameras cannot be easily damaged.

The image storage device 300 controls the imaging cameras 200a and 200b so that the imaging cameras 200a and 200b are operated in response to the signals detected by the motion detection sensors 100a and 100b. Of course, such control may be performed such that the signals detected by the motion detection sensors 100a and 100b are output to the imaging cameras 200a and 200b and the operations of the imaging cameras may be directly controlled.

In particular, the image storage device 300 must be able to store images and voices captured by the imaging cameras 200a and 200b and to output the images and voices if necessary. Preferably, as an example of the image storage device 300 enabling such storage and output, a Digital Video Recorder (DVR) is used.

Further, the image storage device 300 may be implemented as a Network Video Recorder (NVR). This NVR is configured to enable mutual communication between the image storage device 300 and the imaging cameras 200a and 200b using a wired or wireless transceiver, thus enabling the management and control of the system to be performed even from a remote place.

The door lock system according to the first embodiment implemented in this way always monitors motion inside and outside the door D, and captures and stores images of the indoor or outdoor area if any motion is detected, and so even if any one imaging camera is damaged by an intruder, the other imaging camera may capture images of the intruder and store captured data, thus enhancing a security function.

For example, even if the intruder breaks an imaging camera on the outside of the door, images of the motion of the intruder can be captured using the imaging camera on the inside of the door, and then the images captured in this way can be utilized as security data.

### (Second embodiment)

Fig. 3 is a block diagram schematically showing the configuration of a door lock system according to a second embodiment of the present invention. Here, the same reference numerals are assigned to components identical to those of the above-described first embodiment, and detailed descriptions thereof will be omitted. Further, reference numeral 410 denotes a doorbell monitor installed in an indoor area so as to check an external visitor when a doorbell rings.

The door lock system according to the second embodiment of the present invention is configured to store images of a visitor in conjunction with a doorbell 400, thus further enhancing a security function.

For this operation, the door lock system according to the second embodiment transmits an operation signal for the doorbell 400 to an image storage device 300, and stores images that are displayed on the doorbell monitor 410 in the image storage device 300 when the operation signal is input. The images at this time refer to images obtained by capturing images of an area in front of the door D using a camera (not shown) typically provided in a doorbell system.

Meanwhile, in the second embodiment of the present invention, the images may be obtained by capturing images of the manipulation of the doorbell 400 using imaging cameras 200a and 200b under the control of the image storage device 300, rather than images that are displayed on the doorbell monitor 410. That is, when a manipulation signal for the doorbell 400 is present, the image storage device 300 enables images to be captured by operating the imaging camera 200a or 200b installed on the front side of the door D. The images captured in this way are stored in the image storage device 300 at the same time that the images are displayed on the doorbell monitor 410.

### (Control method)

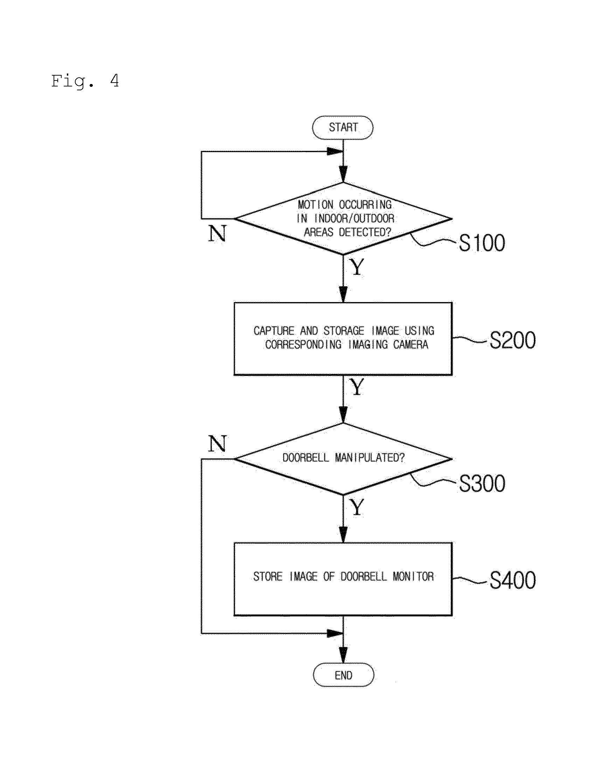

Fig. 4 is a flowchart showing a method of controlling the door lock system according to the present invention. Here, the method of controlling the door lock system according to the second embodiment will be described. The control method according to the present invention is performed through four steps as follows:

First step S100 is the step of detecting motion occurring in indoor/outdoor areas. The detection of motion at this time is performed by the motion detection sensors 100a and 100b respectively installed inside and outside the door D.

Further, when motion is detected in the indoor or outdoor area, a detected signal is used to operate the imaging cameras 200a or 200b.

Further, at first step S100, if any motion is not detected in the indoor or outdoor area, the first step S100 is repeatedly performed until any motion is detected.

Second step S200 is the step of capturing and storing an image of the motion. Here, the capturing is performed by the corresponding imaging camera 200a or 200b. That is, when the motion detection sensor 100a or 100b that detected the presence of the motion is a sensor installed on the outside of the door, only the imaging camera 200a or 200b on the outside of the door is operated to capture an image of the motion. In this case, the imaging camera 200a or 200b may receive a detected signal directly from the motion detection sensor 100a or 100b and then be operated, or may be operated under the control of the image storage device 300.

Meanwhile, the images captured by the imaging cameras 200a and 200b are stored in the image storage device 300. Further, if the monitor (not shown) of a manager is provided, the image storage device 300 may transmit the images to the monitor while storing the images.

Third step S300 is the step of determining whether the doorbell 400 has been manipulated. The determination at this time is performed by the image storage device 300 connected to the doorbell 400.

If there is no manipulation, such as the pressing of the doorbell 400, the control step is terminated, whereas if there is a manipulation, fourth step S400 is performed.

Fourth step S400 is the step of storing an image of a user who is manipulating the doorbell 400 in front of the door D in the image storage device 300.

The image at this time is an image that has been captured by a typical camera installed together with the doorbell 400 and is displayed on the doorbell monitor 410.

Of course, as the image stored in the image storage device 300, the image captured by the imaging camera 200a or 200b may also be used, as described above.

As described above, the present invention is configured such that imaging cameras are installed on both sides of a door so that motion occurring inside and outside the door is individually detected and images of the corresponding area can be captured if any motion occurs, and thus the motion of an intruder can always be captured even if any one imaging camera is intentionally damaged, and captured images can be utilized as arrest data relating to the intruder, with the result that a security function can be further enhanced.

## Claims

1. An enhanced-security door lock system comprising:
motion detection sensors (100a and 100b) respectively installed inside and outside a door (D) and configured to detect surrounding motion;
imaging cameras (200a and 200b) respectively installed inside and outside the door (D) and configured to capture images of indoor and outdoor areas in response to operation signals output from the motion detection sensors (100a and 100b); and
an image storage device (300) configured to store and output images and voices captured by the imaging cameras (200a and 200b).

2. The enhanced-security door lock system of claim 1, wherein the motion detection sensors (100a and 100b) additionally detect motion of a user who opens or closes the door (D).

3. The enhanced-security door lock system of claim 1, wherein each of the imaging cameras (200a and 200b) is an infrared camera, a thermal imaging camera, a network camera, or a Closed Circuit Television (CCTV) camera.

4. The enhanced-security door lock system of claim 1, wherein the image storage device (300) is a Digital Video Recorder (DVR) or a Network Video Recorder (NVR).

5. The enhanced-security door lock system of claim 1 or 2, wherein the image storage device (300) stores images of the imaging camera (200a or 200b) capturing the motion of the user in response to manipulation of a doorbell (400), or stores images displayed on a doorbell monitor (410) in response to manipulation of the doorbell (400).

6. A method of controlling an enhanced-security door lock system comprising:
a first step (S100) of detecting motion using motion detection sensors (100a and 100b) installed inside and outside a door (D), and repeatedly performing the first step (S100) if any motion is not detected;
a second step (S200) of, if it is determined that motion is detected, capturing an image of the motion using a corresponding imaging camera (200a or 200b), and storing the motion image in an image storage device (300);
a third step (S300) of determining whether a doorbell (400) has been manipulated, and if it is determined that the doorbell (400) has not been manipulated, completing the step; and
a fourth step (S400) of, if it is determined that the doorbell (400) has been manipulated, storing an image displayed on a doorbell monitor (410) or an image of the imaging camera (200a or 200b) capturing the motion in the image storage device (300).
